# EUROPÄISCHE PATENTSCHRIFT

(11) **EP 4 341 758 B1**
(45) Veröffentlichungstag und Bekanntmachung des Hinweises auf die Patenterteilung: **12.11.2025**
(21) Anmeldenummer: 22708048.8
(22) Anmeldetag: 07.02.2022
(51) Int. Cl.: G05B 19/042, G07C 5/00

(54) **VERFAHREN, VORRICHTUNG, COMPUTERPROGRAMM UND COMPUTERLESBARES SPEICHERMEDIUM ZUR ERMITTLUNG VON FEHLERBEHAFTETEN FAHRZEUGEN**
METHOD, APPARATUS, COMPUTER PROGRAMME, AND COMPUTER-READABLE STORAGE MEDIUM FOR DETERMINING DEFECTIVE VEHICLES
PROCÉDÉ, APPAREIL, PROGRAMME INFORMATIQUE ET SUPPORT DE STOCKAGE LISIBLE PAR ORDINATEUR POUR DÉTERMINER DES VÉHICULES DÉFECTUEUX

(30) Priorität: 17.05.2021 DE 102021112661
(43) Veröffentlichungstag der Anmeldung: 27.03.2024
(73) Patentinhaber: Bayerische Motoren Werke Aktiengesellschaft, 80809 München (DE)
(72) Erfinder: BROSS, Marco, 04660-000 Sao Paulo (BR); FRANK, Markus, 81373 München (DE); EBERL, Florian, 85447 Fraunberg (DE); HOLLMAYER-LAHRSOW, Julia, 84094 Ratzenhofen (DE)
(86) Internationale Anmeldenummer: PCT/EP2022/052918
(87) Internationale Veröffentlichungsnummer: WO 2022/242921

(56) Entgegenhaltungen:
- DE-A1- 102018 213 010
- US-A1- 2020 274 729

## Beschreibung

Es wird ein Verfahren zur Ermittlung von fehlerbehafteten Fahrzeugen angegeben. Darüber hinaus werden eine Vorrichtung, ein Computerprogramm und ein computerlesbares Speichermedium angegeben.

Die Druckschrift DE 10 2018 213010 A1 beschreibt ein Verfahren zur Bereitstellung einer ersten Information in Bezug auf mehrere Fahrzeuge. Das Verfahren umfasst das Veranlassen von zumindest einem physikalischen Vorgang in zwei oder mehr Fahrzeugen. Des Weiteren umfasst das Verfahren das Ermitteln von Reaktionsdaten in Bezug auf eine, durch die Ausführung des physikalischen Vorgangs in den zwei oder mehr Fahrzeugen, verursachte Wirkung. Ferner umfasst das Verfahren das Abgleichen der Reaktionsdaten der zwei oder mehr Fahrzeuge und das Bereitstellen einer ersten Information auf Basis des Abgleichs.

Eine zu lösende Aufgabe besteht darin, ein Verfahren anzugeben, bei dem fehlerbehaftete Fahrzeuge besonders einfach und schnell ermittelt werden. Des Weiteren sollen eine Vorrichtung und ein Computerprogramm angegeben werden, die ein solches Verfahren ausführen können. Darüber hinaus soll ein computerlesbares Speichermedium mit einem derartigen Computerprogramm angegeben werden.

Diese Aufgaben werden durch das Verfahren und die Gegenstände der unabhängigen Patentansprüche gelöst. Vorteilhafte Ausgestaltungen, Implementierungen und Weiterbildungen sind Gegenstand der jeweils abhängigen Patentansprüche.

Zunächst wird das Verfahren zur Ermittlung von fehlerbehafteten Fahrzeugen erläutert. Die fehlerbehafteten Fahrzeuge sind eine Teilmenge von Fahrzeugen. Die Fahrzeuge bilden beispielsweise eine Gesamtmenge, wobei die Fahrzeuge der Gesamtmenge beispielsweise miteinander vernetzt sind. Die Fahrzeuge sind beispielsweise mittels einer Vorrichtung vernetzt. Zum Beispiel ist jedes der Fahrzeuge mittels einer Kommunikationsverbindung mit der Vorrichtung, insbesondere einer externen Vorrichtung, verbunden. Die Vorrichtung ist beispielsweise ein Server, insbesondere ein Backend Server. Die Fahrzeuge sind in eine Vielzahl von Fahrzeugtypen gegliedert. Bei dem Fahrzeugtyp handelt es sich beispielsweise um eine Typenbezeichnung des Fahrzeugs. Beispielsweise umfasst jeder Fahrzeugtyp mehrere der Fahrzeuge. Fahrzeuge, die von einem Fahrzeugtyp umfasst sind, sind beispielsweise nicht von einem anderen Fahrzeugtyp umfasst. Die Fahrzeugtypen gruppieren beispielsweise die Fahrzeuge.

Gemäß zumindest einer Ausführungsform des Verfahrens wird jeweils ein Erwartungswert von einer Anzahl zu versendender vorgegebener Nachrichten je Fahrzeugtyp bereitgestellt. Bei dem Erwartungswert handelt es sich beispielsweise um den Mittelwert der Anzahl zu versendender vorgegebener Nachrichten je Fahrzeugtyp. Beispielsweise werden die Erwartungswerte zeitlich vor dem Bereitstellen ermittelt. Das heißt, die Erwartungswerte werden beispielswiese jeweils vor Durchführung des Verfahrens ermittelt. Der Erwartungswert wird beispielsweise auf Basis einer kürzeren Vergangenheit ermittelt, beispielsweise der letzten 4 Wochen oder der letzten 12 Wochen, vor Ausführung des Verfahrens. Mit Vorteil ist der Erwartungswert damit nicht stationär, sondern kann sich dynamisch verändern.

Gemäß zumindest einer Ausführungsform des Verfahrens wird ein Istwert von einer Anzahl gesendeter vorgegebener Nachrichten für jedes Fahrzeug ermittelt. Beispielsweise werden die Istwerte in Abhängigkeit eines Zeitintervalls ermittelt. Bei dem Zeitintervall handelt es sich beispielsweise mindestens 1 Stunde und höchstens 48 Stunden, insbesondere 24 Stunden. Insbesondere ist das Zeitintervall repräsentativ für einen Wochentag.

Beispielsweise werden die gesendeten vorgegebenen Nachrichten für jedes Fahrzeug während einem Betrieb des Fahrzeugs an die externe Vorrichtung gesendet, wo sie beispielsweise gespeichert und verarbeitet werden. Zum Beispiel werden zur Ermittlung der Istwerte jeweils die gesendeten vorgegebenen Nachrichten jedes Fahrzeugs innerhalb des Zeitintervalls verarbeitet. Bei den Istwerten handelt es sich beispielsweise um eine Anzahl an gesendeten vorgegebenen Nachrichten innerhalb des Zeitintervalls.

Bei den zu versenden vorgegebenen Nachrichten und/oder bei den gesendeten vorgegebenen Nachrichten handelt es sich beispielsweise um Nachrichten, die Zustandsdaten der jeweiligen Fahrzeuge umfassen. Wird ein Fahrzeug betrieben, sendet dieses Fahrzeug beispielsweise eine vorgegebene Nachricht umfassend die Zustandsdaten an die externe Vorrichtung. Beispielsweise handelt es sich bei den Zustandstaten um Daten des Fahrzeugs, die einem Benutzer im Fahrzeug und/oder auf einer mobilen Vorrichtung angezeigt werden.

Gemäß zumindest einer Ausführungsform des Verfahrens wird ein Abweichungswert für jedes Fahrzeug ermittelt, wobei jeder Abweichungswert repräsentativ für eine Differenz des Istwerts und dem Erwartungswert ist. Beispielsweise weist jedes Fahrzeug einen Abweichungswert auf.

Weiterhin weist jedes Fahrzeug neben dem Abweichungswert zum Beispiel zumindest eine Eigenschaft auf. Die Eigenschaft umfasst beispielsweise eine der folgenden Informationen: Fahrzeugtyp, Produktupdate, Softwareversion, Kombination von Steuergeräten, zugeordneter Heimatmarkt, Backend-Hub, Produktionsdatum. Die Fahrzeuge umfassen beispielsweise zumindest teilweise die gleichen Eigenschaften.

Beispielsweise gibt die Information umfassend das Produktupdate an, welche Art von Updates eine Software, insbesondere eine Steuersoftware, des Fahrzeugs umfasst. Analog gibt die Information umfassend die Softwareversion an, auf welchem Stand die Software, insbesondere die Steuersoftware, des Fahrzeugs ist. Die Information umfassend die Kombination von Steuergeräten gibt beispielsweise an, welche Steuergeräte in dem Fahrzeug verbaut sind und/oder welche Steuergeräte miteinander kommunizieren. Die Information umfassend den zugeordneten Heimatmarkt gibt an, in welcher geographischen Region das Fahrzeug hauptsächlich betrieben wird. Die Information umfassend den Backend-Hub gibt an, mit welchem externen Backend-Hub das Fahrzeug verbunden ist.

Gemäß zumindest einer Ausführungsform des Verfahrens wird eine fehlerbehaftete Subgruppe von fehlerbehafteten Fahrzeugen in Abhängigkeit der Abweichungswerte ermittelt.

Die fehlerbehaftete Subgruppe umfasst beispielsweise fehlerbehaftete Fahrzeuge, bei denen die Abweichungswerte vergleichsweise groß sind.

Gemäß zumindest einer Ausführungsform des Verfahrens ist der Istwert der fehlerbehafteten Subgruppe verschieden von dem Erwartungswert.

Beispielsweise umfasst die fehlerbehaftete Subgruppe fehlerbehaftete Fahrzeuge, die im Vergleich zu den zu versendenden vorgegebenen Nachrichten besonders wenige gesendete vorgegebene Nachrichten umfasst. Das heißt, die fehlerhaften Fahrzeugte der fehlerhaften Subgruppe versenden vergleichsweise wenige Nachrichten. In diesem Fall ist der Istwert der fehlerbehafteten Subgruppe kleiner als der Erwartungswert.

Alternativ kann der Istwert größer als der Erwartungswert sein. Beispielsweise senden die fehlerbehafteten Fahrzeuge in diesem Fall mehr gesendete vorgegebene Nachrichten.

Beispielsweise ist der Istwert der fehlerbehafteten Subgruppe zumindest zwei Standartabweichungen größer oder kleiner als der Erwartungswert.

Mit einem derartigen Verfahren kann eine fehlerbehaftete Subgruppe umfassend fehlerbehaftete Fahrzeuge besonders einfach und schnell ermittelt werden. Diese fehlerbehafteten Fahrzeuge umfassen beispielsweise gemeinsame Eigenschaften, die für einen Fehler verantwortlich sind.

Betrifft der Fehler beispielsweise nur eine Teilmenge der Fahrzeuge, insbesondere eine Teilmenge vernetzter Fahrzeuge einer Flotte, kann durch das angegebene Verfahren die fehlerbehaftete Subgruppe identifiziert werden. Diese fehlerbehaftete Subgruppe umfasst beispielsweise fehlerbehaftete Fahrzeuge, die nur bestimmte Fahrzeugtypen eines Backend-Hubs mit einer bestimmten Softwareversion und/oder einem bestimmten Produktionsdatum aufweisen.

Damit sind die Eigenschaften der fehlerbehafteten Fahrzeuge bekannt und es können gezielt Abhilfemaßnahmen eingeleitet werden.

Gemäß zumindest einer Ausführungsform des Verfahrens wird beim Bereitstellen des Erwartungswerts zusätzlich jeweils eine Standardabweichung von der Anzahl zu versendender vorgegebener Nachrichten je Fahrzeugtyp bereitgestellt. Insbesondere werden beim Bereitstellen jeweils ein Erwartungswert und eine Standardabweichung von der Anzahl zu versendender vorgegebener Nachrichten je Fahrzeugtyp bereitgestellt.

Alternativ wird beim Bereitstellen des Erwartungswerts zusätzlich jeweils eine Breite von der Anzahl zu versendender vorgegebener Nachrichten je Fahrzeugtyp bereitgestellt. Die Breite entspricht hierbei beispielsweise einem Abstand des 20 % Perzentils zum 80 % Perzentil des Erwartungswerts.

Gemäß zumindest einer Ausführungsform des Verfahrens ist jeder Abweichungswert repräsentativ für eine Anzahl von Standardabweichungen von dem Erwartungswert.

Gemäß zumindest einer Ausführungsform des Verfahrens wird jeder Erwartungswert in Abhängigkeit mehrerer Zeitintervalle ermittelt, und die Zeitintervalle sind jeweils repräsentativ für einen Wochentag. Beispielsweise ist jedem Wochentag für jeden Fahrzeugtyp ein einzelner Erwartungswert, insbesondere ein einzelner Erwartungswert und eine einzelne Standardabweichung, zugeordnet.

Gemäß zumindest einer Ausführungsform des Verfahrens wird beim Ermitteln der fehlerbehafteten Subgruppe ein globaler Median ermittelt, der repräsentativ für alle Abweichungswerte der Fahrzeuge ist. Insbesondere ist der globale Median ein Median von allen Abweichungswerten.

Gemäß zumindest einer Ausführungsform des Verfahrens wird beim Ermitteln der fehlerbehafteten Subgruppe zumindest eine erste Subgruppe in Abhängigkeit einer ersten Eigenschaft ermittelt.

Gemäß zumindest einer Ausführungsform des Verfahrens weist die zumindest eine erste Subgruppe einen ersten Median auf, der eine maximale Differenz zu dem globalen Median aufweist.

Gemäß zumindest einer Ausführungsform des Verfahrens wird beim Ermitteln der fehlerbehafteten Subgruppe aus der zumindest einen ersten Subgruppe zumindest eine zweite Subgruppe und zumindest eine dritte Subgruppe erzeugt.

Gemäß zumindest einer Ausführungsform des Verfahrens weist die zumindest eine zweite Subgruppe in Abhängigkeit einer zweiten Eigenschaft einen zweiten Median auf.

Gemäß zumindest einer Ausführungsform des Verfahrens weist die zumindest eine dritte Subgruppe in Abhängigkeit einer dritten Eigenschaft einen dritten Median auf.

Gemäß zumindest einer Ausführungsform des Verfahrens ist eine Differenz des zweiten Medians und des dritten Medians maximiert.

Beispielsweise werden aus der zumindest einen zweiten Subgruppe und/oder der zumindest einen dritten Subgruppe weitere Subgruppen in Abhängigkeit weiterer Eigenschaften erzeugt.

Gemäß zumindest einer Ausführungsform des Verfahrens wird die fehlerbehaftete Subgruppe in Abhängigkeit einer vorgegebenen Populationsgröße der zweiten Subgruppe und der dritten Subgruppe ermittelt.

Beispielsweise ist die vorgegebene Populationsgröße ein Abbruchkriterium des Verfahrens. Die fehlerbehaftete Subgruppe ist in diesem Fall durch die Subgruppe gebildet, die kleiner als die vorgegebene Populationsgröße ist. Die vorgegebene Populationsgröße der fehlerbehafteten Subgruppe wird in Abhängigkeit einer statistischen Relevanz vorgegeben. Die vorgegebene Populationsgröße ist beispielsweise so groß, dass keine Überanpassung erzeugt wird. Beispielsweise umfasst die vorgegebene Populationsgröße der fehlerbehafteten Subgruppe wenigstens 500 Fahrzeuge und höchstens 5000 Fahrzeuge.

Ist eine Populationsgröße der ersten Subgruppe und/oder der zweiten Gruppe größer als die vorgegebene Populationsgröße, so werden weitere Subgruppen aus der zweiten Subgruppe und/oder der dritten Subgruppe erzeugt. Das Verfahren wird beispielsweise beendet, wenn eine Populationsgröße zumindest einer der weiteren Subgruppen kleiner ist als die vorgegeben Populationsgröße.

Gemäß zumindest einer Ausführungsform des Verfahrens umfassen die ersten, die zweite und die dritte Eigenschaft jeweils zumindest eine der folgenden Informationen: Fahrzeugtyp, Produktupdate, Softwareversion, Kombination von Steuergeräten, zugeordneter Heimatmarkt, Backend-Hub, Produktionsdatum. Werden weitere Subgruppen erzeugt, umfassen die weiteren Eigenschaften ebenfalls eine der oben genannten Informationen.

Gemäß zumindest einer Ausführungsform des Verfahrens unterscheiden sich die erste, die zweite und die dritte Eigenschaft voneinander. Insbesondere unterscheiden sich auch die weiteren Eigenschaften bei der Erzeugung der weiteren Subgruppen voneinander.

Des Weiteren wird eine Vorrichtung zur Ermittlung von fehlerbehafteten Fahrzeugen angegeben. Die Vorrichtung ist dazu ausgebildet, das hier beschriebene Verfahren auszuführen. Sämtliche in Verbindung mit dem Verfahren offenbarten Merkmale der Ausführungsform sind daher auch in Verbindung mit der Vorrichtung offenbart und umgekehrt.

Zudem wird ein Computerprogramm angegeben, umfassend Befehle, die bei der Ausführung des Computerprogramms durch einen Computer diesen veranlassen, das hier beschriebene Verfahren auszuführen.

Weiterhin wird ein computerlesbares Speichermedium angegeben, auf dem das hier beschriebene Computerprogramm gespeichert ist.

Ausführungsbeispiele der Erfindung sind im Folgenden anhand der schematischen Zeichnungen näher erläutert.

Es zeigen:
Figur 1 ein Ablaufdiagramm eines Verfahrens gemäß einem Ausführungsbeispiel,
Figur 2 eine schematische Darstellung eines Systems mit einer Vorrichtung gemäß einem Ausführungsbeispiel, und
Figur 3 eine schematische Darstellung zum Ermitteln einer fehlerbehafteten Subgruppe bei dem Verfahren gemäß einem Ausführungsbeispiel.

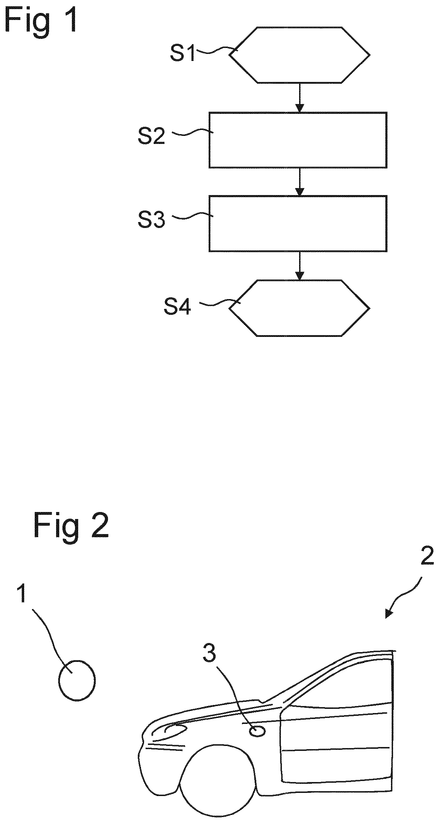

In dem Ablaufdiagramm des Verfahrens gemäß dem Ausführungsbeispiel der Figur 1 wird zunächst ein Verfahrensschritt S1 ausgeführt, bei dem jeweils ein Erwartungswert von einer Anzahl zu versendender vorgegebener Nachrichten je Fahrzeugtyp bereitgestellt wird.

Beispielsweise ist jedes Fahrzeug 2 einer vernetzten Fahrzeugflotte dazu ausgebildet, während des Betriebs Nachrichten zu versenden. Diese Nachrichten sind vorgegebene Nachrichten und umfassen beispielsweise jeweils Zustandsdaten des jeweiligen Fahrzeugs 2. Pro Fahrzeugtyp kann ein Erwartungswert gebildet werden, der eine Anzahl von zu versendender vorgegebener Nachrichten umfasst, wobei die zu versendenden vorgegebenen Nachrichten jeweils repräsentativ für einen Fahrzeugtyp ist. Weiterhin umfasst der Erwartungswert die Anzahl von zu versendender vorgegebener Nachrichten innerhalb eines Wochentages.

Die Erzeugung der Erwartungswerte kann zeitlich vor der Ermittlung einer fehlerbehafteten Subgruppe der Fahrzeuge 2 erfolgen.

In einem nachfolgenden Verfahrensschritt S2 wird jeweils ein Istwert von einer Anzahl gesendeter vorgegebener Nachrichten für jedes Fahrzeug 2 ermittelt.

Beispielsweise sendet jedes Fahrzeug 2 im Betrieb die vorgegebenen Nachrichten an eine Vorrichtung 1, insbesondere eine externe Vorrichtung, wo diese vorgegebenen Nachrichten gespeichert werden. Beispielsweise wird die Anzahl der gesendeten vorgegebenen Nachrichten innerhalb eines Wochentages ermittelt, die dem Istwert entsprechen.

In dem weiteren Verfahrensschritt S3 wird nachfolgend ein Abweichungswert für jedes Fahrzeug 2 ermittelt, wobei jeder Abweichungswert repräsentativ für eine Differenz des Istwerts und dem Erwartungswert ist. Das heißt, die Anzahl von zu versendender vorgegebener Nachrichten innerhalb eines Wochentages wird mit der Anzahl der gesendeten vorgegebenen Nachrichten innerhalb eines Wochentages, insbesondere des gleichen Wochentages, ermittelt.

Nachfolgend wird in einem Verfahrensschritt S4 eine fehlerbehaftete Subgruppe von fehlerbehaften Fahrzeugen in Abhängigkeit der Abweichungswerte ermittelt, wobei der Istwert der fehlerbehafteten Subgruppe kleiner ist als der Erwartungswert. Die fehlerbehafteten Fahrzeuge umfassen jeweils zumindest eine Eigenschaft, wobei diese Eigenschaft gleich ist. Ist die Anzahl der gesendeten vorgegebenen Nachrichten innerhalb eines Wochentages wesentlich kleiner als die Anzahl von zu versendender vorgegebener Nachrichten innerhalb des Wochentages, insbesondere des gleichen Wochentages, ist eine Wahrscheinlichkeit erhöht, dass ein Fehler aufgrund der Eigenschaft induziert wird.

Das System gemäß dem Ausführungsbeispiel der Figur 2 umfasst eine Vorrichtung 1, insbesondere eine externe Vorrichtung, die dazu ausgebildet ist mit einem Fahrzeug 2 über eine Kommunikationsverbindung 3 in Verbindung zu stehen. Die Kommunikationsverbindung 3 ist dazu ausgebildet die gesendeten vorgegebenen Nachrichten an die Vorrichtung 1 zu übermitteln.

Die Vorrichtung 1 ist dazu ausgebildet, das Verfahren gemäß der Figur 1 auszuführen.

Die Vorrichtung ist beispielsweise in einem Backend-Server ausgebildet.

Die Vorrichtung 1 weist hierfür insbesondere eine Recheneinheit, einen Programm- und Datenspeicher, sowie beispielsweise eine oder mehrere Kommunikationsschnittstellen auf. Der Programm- und Datenspeicher und/oder die Recheneinheit und/oder die Kommunikationsschnittstellen können in einer Baueinheit und/oder verteilt auf mehrere Baueinheiten ausgebildet sein.

Auf dem Programm- und Datenspeicher der Vorrichtung 1 ist zur Ausführung des Verfahrens insbesondere ein Programm zur Ermittlung von fehlerbehafteten Fahrzeugen gespeichert, welches obig beschriebenes Verfahren abarbeitet.

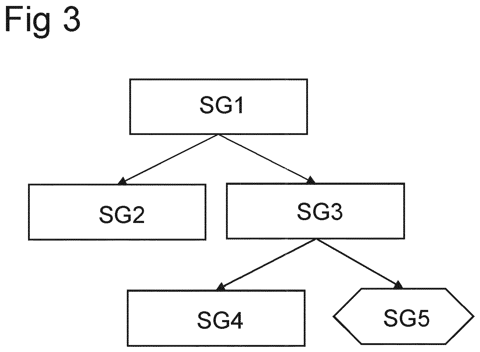

Gemäß der Figur 3 wird zunächst eine erste Subgruppe SG1 in Abhängigkeit einer ersten Eigenschaft ermittelt. Bei der ersten Eigenschaft handelt es sich beispielsweise um eine Information bezüglich eines ersten Produktupdates. Alle Fahrzeuge mit dieser Eigenschaft sind von der ersten Subgruppe SG1 umfasst.

Insbesondere weist die erste Subgruppe SG1 einen ersten Median auf, der eine maximale Differenz zu einem globalen Median aufweist, wobei der globale Median repräsentativ für alle Abweichungswerte der Fahrzeuge 2 ist. Beispielsweise umfasst die erste Subgruppe SG1 600000 Fahrzeuge.

Nachfolgend wird aus der ersten Subgruppe SG1 eine zweite Subgruppe SG2 und eine dritte Subgruppe SG3 erzeugt. Die zweite Subgruppe SG2 umfasst beispielsweise die Fahrzeuge der ersten Subgruppe SG1, bei denen der Istwert dem Erwartungswert entspricht. Die dritte Subgruppe SG3 umfasst beispielsweise die Fahrzeuge der ersten Subgruppe SG1, bei denen der Istwert verschieden vom Erwartungswert ist.

Die zweite Subgruppe SG2 umfasst Fahrzeuge in Abhängigkeit einer zweiten Eigenschaft. Bei der zweiten Eigenschaft handelt es sich beispielsweise um eine Information bezüglich eines zweiten Produktupdates. Alle Fahrzeuge der zweiten Subgruppe SG2 umfassen damit Fahrzeuge mit der ersten Eigenschaft und der zweiten Eigenschaft. Zudem weist die zweite Subgruppe SG2 einen zweiten Median auf.

Die dritte Subgruppe SG3 umfasst Fahrzeuge in Abhängigkeit einer dritten Eigenschaft. Bei der dritten Eigenschaft handelt es sich beispielsweise um eine Information bezüglich eines Heimatmarktes. Alle Fahrzeuge der dritten Subgruppe SG 3 umfassen damit Fahrzeuge mit der ersten Eigenschaft und der dritten Eigenschaft. Zudem weist die dritte Subgruppe SG3 einen dritten Median auf.

Hierbei sind die zweite Subgruppe SG2 und die dritte Subgruppe SG3 so gewählt, dass eine Differenz des zweiten Medians und des dritten Medians maximiert ist.

Nachfolgend werden aus der dritten Subgruppe SG3 weitere Subgruppen in Abhängigkeit weiterer Eigenschaften erzeugt, nämlich eine vierte Subgruppe SG4 und eine fünfte Subgruppe SG5. Die vierte Subgruppe SG4 umfasst beispielsweise die Fahrzeuge der dritten Subgruppe SG3, bei denen der Istwert dem Erwartungswert entspricht. Die fünfte Subgruppe SG5 umfasst beispielsweise die Fahrzeuge der ersten Subgruppe SG1, bei denen der Istwert verschieden vom Erwartungswert ist. Beispielsweise umfasst die fünfte Subgruppe SG5 nur noch 15000 Fahrzeuge.

Diese fünfte Subgruppe SG5 entspricht der fehlerbehafteten Subgruppe von fehlerbehaften Fahrzeugen gemäß dem Verfahren in Verbindung mit dem Ausführungsbeispiel der Figur 1.

### Referenzzeichenliste

- 1: Vorrichtung
- 2: Fahrzeug
- 3: Kommunikationsvorrichtung

- SG1: erste Subgruppe
- SG2: zweite Subgruppe
- SG3: dritte Subgruppe
- SG4: vierte Subgruppe
- SG5: fünfte Subgruppe

- S1..S4: Verfahrensschritt

## Patentansprüche

1. Verfahren zur Ermittlung von fehlerbehafteten Fahrzeugen, wobei die fehlerbehafteten Fahrzeuge eine Teilmenge von Fahrzeugen (2) ist und die Fahrzeuge (2) in eine Vielzahl von Fahrzeugtypen gegliedert sind, umfassend:
- Bereitstellen (S1) jeweils eines Erwartungswerts von einer Anzahl zu versendender vorgegebener Nachrichten je Fahrzeugtyp,
- Ermitteln (S2) eines Istwerts von einer Anzahl gesendeter vorgegebener Nachrichten von jedem Fahrzeug (2),
- Ermitteln (S3) eines Abweichungswerts für jedes Fahrzeug (2), wobei jeder Abweichungswert repräsentativ für eine Differenz des Istwerts und dem jeweiligen Erwartungswert ist,
- Ermitteln (S4) einer fehlerbehafteten Subgruppe umfassend fehlerbehafte Fahrzeuge in Abhängigkeit der Abweichungswerte, wobei der Istwert der fehlerbehafteten Subgruppe verschieden vom Erwartungswert ist.

2. Verfahren nach Anspruch 1,
wobei beim Bereitstellen des Erwartungswerts zusätzlich jeweils eine Standartabweichung von der Anzahl zu versendender vorgegebener Nachrichten je Fahrzeugtyp bereitgestellt wird.

3. Verfahren nach Anspruch 2,
wobei jeder Abweichungswert repräsentativ für eine Anzahl von Standartabweichungen von dem Erwartungswert ist.

4. Verfahren nach einem der Ansprüche 1 bis 3,
wobei jeder Erwartungswert in Abhängigkeit mehrerer Zeitintervalle ermittelt wird, und die Zeitintervalle sind jeweils repräsentativ für einen Wochentag.

5. Verfahren nach einem der Ansprüche 1 bis 4, wobei beim Ermitteln der fehlerbehafteten Subgruppe
- ein globaler Median ermittelt wird, der repräsentativ für alle Abweichungswerte der Fahrzeuge (2) ist,
- zumindest eine erste Subgruppe (SG1) in Abhängigkeit einer ersten Eigenschaft ermittelt wird, wobei
**--** die zumindest eine erste Subgruppe (SG1) einen ersten Median aufweist, der eine maximale Differenz zu dem globalen Median aufweist,
- aus der zumindest einen ersten Subgruppe (SG1) zumindest eine zweite Subgruppe (SG2) und zumindest eine dritte Subgruppe (SG3) erzeugt werden, wobei
-- die zumindest eine zweite Subgruppe (SG2) in Abhängigkeit einer zweiten Eigenschaft einen zweiten Median aufweist,
**--** die zumindest eine dritte Subgruppe (SG3) in Abhängigkeit einer dritten Eigenschaft einen dritten Median aufweist, und
**--** eine Differenz des zweiten Medians und des dritten Medians maximiert ist.

6. Verfahren nach Anspruch 5,
wobei die fehlerbehaftete Subgruppe in Abhängigkeit einer vorgegebenen Populationsgröße der zweiten Subgruppe (SG2) und der dritten Subgruppe (SG3) ermittelt wird.

7. Verfahren nach Anspruch 5 oder 6, wobei
- die erste, die zweite und die dritte Eigenschaft jeweils zumindest eine der folgenden Informationen umfassen:
Fahrzeugtyp, Produktupdate, Softwareversion, Kombination von Steuergeräten, zugeordneter Heimatmarkt, Backend-Hub, Produktionsdatum, und
- sich die erste, die zweite und die dritte Eigenschaft voneinander unterscheiden.

8. Vorrichtung (1) zur Ermittlung von fehlerbehafteten Fahrzeugen, das dazu ausgebildet ist, das Verfahren nach einem der Ansprüche 1 bis 7 durchzuführen.

9. Computerprogramm umfassend Befehle, die bei der Ausführung des Computerprogramms durch einen Computer diesen veranlassen, das Verfahren nach einem der Ansprüche 1 bis 7 auszuführen.

10. Computerlesbares Speichermedium, auf dem das Computerprogramm nach Anspruch 9 gespeichert ist.

## Claims

1. Method for determining faulty vehicles, wherein the faulty vehicles are a subset of vehicles (2) and the vehicles (2) are divided into a plurality of vehicle types, comprising:
• Providing (S1) an expected value of a number of predetermined messages to be sent for each vehicle type,
• Determining (S2) an actual value of a number of predetermined messages sent from each vehicle (2),
• Determining (S3) a deviation value for each vehicle (2), wherein each deviation value is representative of a difference between the actual value and the respective expected value,
• Determining (S4) a faulty subgroup comprising faulty vehicles depending on the deviation values, wherein the actual value of the faulty subgroup is different from the expected value.

2. Method according to claim 1,
wherein during the provision of the expected value, additionally a standard deviation of the number of predetermined messages to be sent is provided for each vehicle type.

3. Method according to claim 2,
wherein each deviation value is representative of a number of standard deviations from the expected value.

4. Method according to any one of claims 1 to 3,
wherein each expected value is determined depending on multiple time intervals, and the time intervals are each representative of a day of the week.

5. Method according to any one of claims 1 to 4, wherein in determining the faulty subgroup
• a global median is determined, which is representative of all deviation values of the vehicles (2),
• at least one first subgroup (SG1) is determined depending on a first property, wherein
**--** the at least one first subgroup (SG1) has a first median that has a maximum difference to the global median,
• at least one second subgroup (SG2) and at least one third subgroup (SG3) are generated from the at least one first subgroup (SG1), wherein
**--** the at least one second subgroup (SG2) has a second median depending on a second property,
-- the at least one third subgroup (SG3) has a third median depending on a third property, and
-- a difference between the second median and the third median is maximized.

6. Method according to claim 5,
wherein the faulty subgroup is determined depending on a predetermined population size of the second subgroup (SG2) and the third subgroup (SG3).

7. Method according to claim 5 or 6, wherein
• the first, the second and the third property each comprise at least one of the following information: vehicle type, product update, software version, combination of control units, assigned home market, backend hub, production date, and
• the first, the second and the third property differ from each other.

8. Device (1) for determining faulty vehicles, which is designed to carry out the method according to any one of claims 1 to 7.

9. Computer program comprising commands which, when the computer program is executed by a computer, cause it to carry out the method according to any one of claims 1 to 7.

10. Computer-readable storage medium on which the computer program according to claim 9 is stored.

## Revendications

1. Procédé de détermination de véhicules défectueux, dans lequel les véhicules défectueux sont un sous-ensemble de véhicules (2) et les véhicules (2) sont divisés en une pluralité de types de véhicules, comprenant:
• Fournir (S1) une valeur attendue d'un nombre de messages prédéterminés à envoyer pour chaque type de véhicule,
• Déterminer (S2) une valeur réelle d'un nombre de messages prédéterminés envoyés par chaque véhicule (2),
• Déterminer (S3) une valeur de déviation pour chaque véhicule (2), où chaque valeur de déviation est représentative d'une différence entre la valeur réelle et la valeur attendue respective,
• Déterminer (S4) un sous-groupe défectueux comprenant des véhicules défectueux en fonction des valeurs de déviation, où la valeur réelle du sous-groupe défectueux est différente de la valeur attendue.

2. Procédé selon la revendication 1,
dans lequel lors de la fourniture de la valeur attendue, un écart-type du nombre de messages prédéterminés à envoyer est également fourni pour chaque type de véhicule.

3. Procédé selon la revendication 2,
dans lequel chaque valeur de déviation est représentative d'un nombre d'écarts-types par rapport à la valeur attendue.

4. Procédé selon l'une quelconque des revendications 1 à 3,
dans lequel chaque valeur attendue est déterminée en fonction de plusieurs intervalles de temps, et les intervalles de temps sont chacun représentatifs d'un jour de la semaine.

5. Procédé selon l'une quelconque des revendications 1 à 4, dans lequel lors de la détermination du sous-groupe défectueux
• une médiane globale est déterminée, qui est représentative de toutes les valeurs de déviation des véhicules (2),
• au moins un premier sous-groupe (SG1) est déterminé en fonction d'une première propriété, où
-- le au moins un premier sous-groupe (SG1) a une première médiane qui présente une différence maximale par rapport à la médiane globale,
• au moins un deuxième sous-groupe (SG2) et au moins un troisième sous-groupe (SG3) sont générés à partir du au moins un premier sous-groupe (SG1), où
-- le au moins un deuxième sous-groupe (SG2) a une deuxième médiane en fonction d'une deuxième propriété,
-- le au moins un troisième sous-groupe (SG3) a une troisième médiane en fonction d'une troisième propriété, et
-- une différence entre la deuxième médiane et la troisième médiane est maximisée.

6. Procédé selon la revendication 5,
dans lequel le sous-groupe défectueux est déterminé en fonction d'une taille de population prédéterminée du deuxième sous-groupe (SG2) et du troisième sous-groupe (SG3).

7. Procédé selon la revendication 5 ou 6, dans lequel
• la première, la deuxième et la troisième propriété comprennent chacune au moins l'une des informations suivantes : type de véhicule, mise à jour du produit, version du logiciel, combinaison d'unités de commande, marché domestique attribué, hub backend, date de production, et
• la première, la deuxième et la troisième propriété diffèrent les unes des autres.

8. Dispositif (1) pour déterminer des véhicules défectueux, qui est conçu pour mettre en œuvre le procédé selon l'une quelconque des revendications 1 à 7.

9. Programme informatique comprenant des commandes qui, lorsque le programme informatique est exécuté par un ordinateur, amènent celui-ci à mettre en œuvre le procédé selon l'une quelconque des revendications 1 à 7.

10. Support de stockage lisible par ordinateur sur lequel est stocké le programme informatique selon la revendication 9.
